# EUROPEAN PATENT APPLICATION

(11) **EP 4 636 382 A1**
(43) Date of publication of application: **22.10.2025**
(21) Application number: 24908248.8
(22) Date of filing: 09.12.2024
(51) Int. Cl.: G01N 3/12, G01N 3/06, G01L 1/24, H01M 10/0585

(54) **METHOD AND DEVICE FOR SOLID-STATE BATTERY PRESSURIZATION EVALUATION**

(30) Priority: 22.12.2023 KR 20230190035; 26.11.2024 KR 20240170546
(71) Applicant: LG Energy Solution, Ltd., Seoul 07335 (KR)
(72) Inventor: KIM, Na Yoon, Daejeon 34122 (KR); LEE, Daejin, Daejeon 34122 (KR); HWANG, Sunwoo, Daejeon 34122 (KR); CHA, Hyohyun, Daejeon 34122 (KR); KIM, Ji Young, Daejeon 34122 (KR)
(74) Representative: Goddar, Heinz J.
(86) International application number: PCT/KR2024/096640
(87) International publication number: WO 2025/135966

(57) **Abstract**

The present invention relates to a method for evaluating pressurization of an all-solid-state battery comprising a solid electrolyte, comprising: (1) preparing a subject by positioning a pressure-sensitive member on at least one of an upper side or a lower side of an all-solid-state battery comprising a positive electrode, a negative electrode, and a solid electrolyte layer located between the positive electrode and negative electrode; (2) pressurizing the subject in a thickness direction of the all-solid-state battery; (3) acquiring image information of the pressure-sensitive member after the end of pressurization in step (2); and (4) determining a pressure distribution of the all-solid-state battery by the acquired image information of the pressure-sensitive member, and an apparatus for evaluating pressurization of an all-solid-state battery comprising the subject and a pressurizing means imparting image information for determining pressure distribution of the pressure-sensitive member.

## Description

### [Technical Field]

The present invention relates to a method and apparatus for evaluating pressurization for an all-solid-state battery.

This application claims the benefit of priority to Korean Patent Application No. 10-2023-0190035, filed December 22, 2023, and Korean Patent Application No. 10-2024-0170546, filed November 26, 2024, the disclosures of which are incorporated herein by reference in their entirety.

### [Related Art]

While lithium secondary batteries have been primarily used in small-scale applications such as mobile devices and laptop computers, the research direction has recently expanded to medium and large-scale applications such as energy storage systems (ESS) and electric vehicles (EV).

For these medium- to large-sized lithium secondary batteries, unlike small-sized ones, the operating environment is harsher (e.g., temperature, shock) and more batteries need to be used, so safety needs to be ensured along with good performance and affordable price.

Most commercially available lithium secondary batteries currently utilize organic liquid electrolytes, which are lithium salts dissolved in a flammable organic solvent, and therefore pose a potential risk of leakage, ignition, and explosion. Therefore, the use of solid electrolytes to replace the organic liquid electrolytes has been attracting attention as an alternative to overcome the above safety issues.

Lithium secondary batteries using solid electrolytes offer advantages such as enhanced safety, improved reliability by preventing electrolyte leakage, and facilitating the manufacture of thin batteries. In addition, lithium metal can be used as a negative electrode to improve energy density, which is expected to be applied to small-sized secondary batteries and high-capacity secondary batteries for electric vehicles, making it the next-generation battery.

However, lithium secondary batteries using solid electrolytes have lower ionic conductivity than liquid electrolytes and suffer from poorer output characteristics, especially at low temperatures. In addition, there are problems such as poor surface adhesion of the solid electrolyte to the active material compared to the liquid electrolyte, causing an increase in interfacial resistance due to the volume expansion of the active material during the charge and discharge process, and the distribution of the solid electrolyte without direct contact with the electrode active material, leading to decreased output characteristics or capacity characteristics relative to the amount of conductive material input.

In addition, in the case of lithium secondary batteries using solid electrolyte, lithium dendrites are inevitably generated during the charging and discharging process of the battery, and lithium dendrites formed in the branch form can grow through the solid electrolyte and cause reversible loss of lithium and short circuit of the battery, which is evaluated as a factor that adversely affects the lifespan of lithium secondary batteries.

As a solution to this problem, a "pressurization process" is used to apply an external force during the operation of lithium secondary batteries using solid electrolyte, but it is difficult to easily check whether the pressure is applied uniformly over the entire area of the battery.

### [Prior Art Reference]

### [Patent Reference]

(Patent Reference 1) Japanese Laid-open Patent Publication No. 2012-172984 (September 10, 2012)

### [Detailed Description of the Invention]

### [Technical Problem]

The object of the present invention is to provide a method for evaluating pressurization of an all-solid-state battery comprising a positive electrode, a negative electrode, and a solid electrolyte layer located between the positive electrode and the negative electrode, wherein a pressure-sensitive member is positioned in the all-solid-state battery and then pressurized, and wherein the pressure distribution of the all-solid-state battery can be determined through image information of the pressure-sensitive member obtained by the pressurization.

Another object of the present invention is to provide an apparatus for evaluating pressurization of an all-solid-state battery, comprising a subject comprising an all-solid-state battery with a pressure-sensitive member positioned thereon, and a pressurizing means for imparting image information to the pressure-sensitive member so as to determine the pressure distribution.

### [Technical Solution]

A first aspect of the present invention is a method for evaluating pressurization of an all-solid-state battery comprising a solid electrolyte, comprising: (1) preparing a subject by positioning a pressure-sensitive member on at least one of an upper side or a lower side of an all-solid-state battery comprising a positive electrode, a negative electrode, and a solid electrolyte layer located between the positive electrode and negative electrode; (2) pressurizing the subject in a thickness direction of the all-solid-state battery using a pressurizing means; (3) acquiring image information of the pressure-sensitive member after the end of pressurization in step (2); and (4) determining a pressure distribution of the all-solid-state battery by the acquired image information of the pressure-sensitive member.

In one example of the present invention, the step of acquiring image information of the pressure-sensitive member in step (3) is to obtain information about the intensity of the pressure applied to the all-solid-state battery and the uniformity of the pressure through the degree of discoloration, the area of discoloration and the distribution of the discolored areas in the pressure-sensitive member.

In one example of the present invention, the step of determining the pressure distribution of the all-solid-state battery by the image information of the pressure-sensitive member obtained in step (4) is to obtain color information of a plurality of unit inspection areas in the image of the pressure-sensitive member, calculate an average value thereof, and determine the pressure distribution of the all-solid-state battery by comparing the average value with a standard color sample of the pressure-sensitive member.

In one example of the present invention, the pressure-sensitive member is included in the subject in a number of n (where n is an integer greater than or equal to 1).

In one example of the present invention, the subject comprises all-solid-state batteries in a number of p and pressure-sensitive members in a number of q (where p and q are the same or different from each other, each independently an integer greater than or equal to 1), and the pressure-sensitive members are included between each of the all-solid-state batteries based on when the all-solid-state batteries in a number of p are stacked sequentially.

In one example of the present invention, the pressure-sensitive member is a pressure-sensitive paper that develops color upon being compressed, and the pressure applied to the subject is measured based on the color development state of the pressure-sensitive paper.

In one example of the present invention, the pressurizing means is a device comprising a hydraulic press operated by a jig or a warm hydrostatic press.

In one example of the present invention, prior to pressurization in step (2), at least one of upper side or lower side of the subject in step (1) further comprises an elastic member.

In one example of the present invention, the ratio (a/b) of the size (a) of the cross-sectional area of the portion of the pressurizing means in contact with the subject and the size (b) of the cross-sectional area of the portion of the subject in contact with the pressurizing means at the time of pressurizing in step (2) is at least 8:1.

A second aspect of the present invention provides an apparatus for evaluating pressurization of an all-solid-state battery, comprising: a subject having a pressure-sensitive member located on at least one of an upper side or a lower side of the all-solid-state battery comprising a positive electrode, a negative electrode, and a solid electrolyte layer located between the positive electrode and negative electrode; and a pressurizing means for applying pressure to the subject, imparting image information to the pressure-sensitive member to determine a pressure distribution.

In one example of the present invention, the pressure applied to the subject is applied in the direction of the thickness of the all-solid-state battery.

In one example of the present invention, the pressure-sensitive member is included in the subject in a number of n (where n is an integer greater than or equal to 1).

In one example of the present invention, the pressure-sensitive member is a pressure-sensitive paper that develops color upon being compressed.

In one example of the present invention, the pressurizing means is a device comprising a hydraulic press, a jig or a warm hydrostatic press.

In one example of the present invention, at least one of the upper or lower side of the subject further comprises an elastic member.

### [Advantageous Effects]

According to the present invention, by obtaining pressure information applied to the all-solid-state battery through image information on a pressure-sensitive member obtained in a method for evaluating pressurization of an all-solid-state battery, it is possible to confirm how much clamping pressure has been applied in a face direction or a thickness direction of the all-solid-state battery, visualize it, and apply a clamping pressure to the all-solid-state battery, or obtain information to determine the material and thickness of an elastic member further included in the all-solid-state battery, the size of a jig, and the like. Furthermore, by an apparatus for evaluating pressurization comprising a subject comprising an all-solid-state battery and a pressurizing means, the pressure applied to the all-solid-state battery by the pressurizing means can be easily confirmed through image information of the pressure-sensitive member.

### [Brief Description of Drawing]

FIG. 1 is a schematic illustration of a subject of a method for evaluating pressurization according to one example of the present invention.
FIG. 2 is a schematic illustration of a subject of a method for evaluating pressurization according to another example of the present invention.
FIG. 3 is a schematic diagram illustrating the contact of the pressurizing means with the subject during pressurization according to one example of the present invention.
FIG. 4 is a photograph of a subject of a method for evaluating pressurization according to one example of the present invention.
FIGs. 5 to 7 are photographs illustrating a pressurizing means according to one example of the present invention, and FIG. 8 is a photograph illustrating a subject pressurized according to the pressurizing means according to FIG. 7.
FIGs. 9 and 10 illustrate image information of a pressurized pressure-sensitive member according to one example of the present invention.

### [Best Mode]

Examples of the present invention are described in detail below. The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention. Accordingly, it is to be understood that the configurations described in the examples described herein are only the most preferred examples of the invention and do not represent all of the technical ideas of the invention, and that there may be various equivalents and variations that may be substituted for them at the time of the application.

In this specification, whenever any part "includes" any component, it means that it can include more of the other component, not that it excludes the other component, unless specifically stated to the contrary.

In this specification, the description limiting or further specifying components may apply to any invention and is not limited to any particular invention, unless otherwise specified.

In this specification, throughout the description and claims of the present invention, singular terms include the plural ones unless otherwise indicated.

In addition, throughout the description and claims of the present invention, "or" includes "and" unless otherwise noted. Therefore, "including A or B" means all three of the above cases: including A, including B, or including both A and B.

In this specification, the description that a certain component is "on top of" or "under" another component not only means that it is directly in contact and positioned on the upper and lower side of the other component, but also includes cases where another component exists between the two components.

Also, all numerical ranges include values at both ends and all intermediate values in between, unless explicitly stated to exclude them.

### Method for evaluating pressurization of all-solid-state battery

The present invention provides a method for evaluating pressurization of an all-solid-state battery.

Hereinafter, the method for evaluating pressurization of an all-solid-state battery of the present invention will be described in detail.

The method for evaluating pressurization of an all-solid-state battery according to the present invention comprises: (1) preparing a subject by positioning a pressure-sensitive member on at least one of an upper side or a lower side of an all-solid-state battery comprising a positive electrode, a negative electrode, and a solid electrolyte layer located between the positive electrode and negative electrode; (2) pressurizing the subject in a thickness direction of the all-solid-state battery; (3) acquiring image information of the pressure-sensitive member after the end of pressurization in step (2); and (4) determining a pressure distribution of the all-solid-state battery by the acquired image information of the pressure-sensitive member.

First, ((step (1)) in a method for evaluating pressurization of an all-solid-state battery according to the present invention, a subject is prepared by placing a pressure-sensitive member on at least one of an upper side or a lower side of an all-solid-state battery comprising a positive electrode, a negative electrode, and a solid electrolyte layer located between the positive electrode and negative electrode.

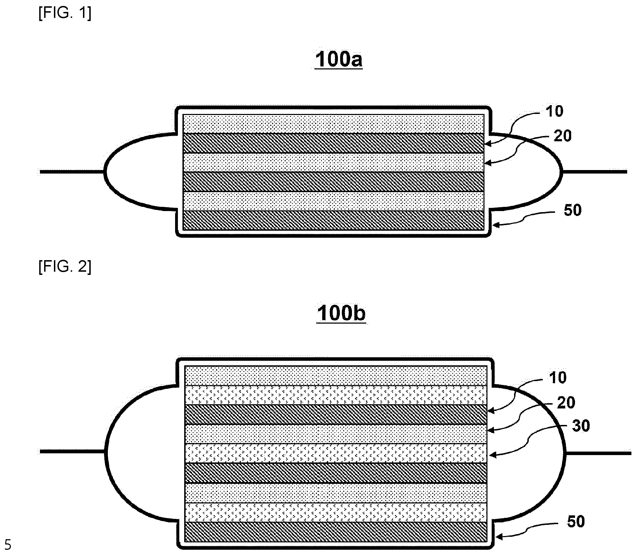

FIG. 1 illustrates a schematic view of a subject (100a) that is the subject of a method for evaluating pressurization according to one example of the present invention.

Referring to FIG. 1, a subject (100a) according to one example of the present invention comprises an electrode assembly (10) of an all-solid-state battery comprising a positive electrode, a negative electrode, and a solid electrolyte layer positioned between the positive electrode and negative electrode, and a pressure-sensitive member (20), wherein the pressure-sensitive member is located on an upper side or a lower side of the electrode assembly. Also,
in one example of the present invention, the subject has the structure in which the all-solid-state battery and pressure-sensitive member are housed in an exterior material (50) such as a pouch.

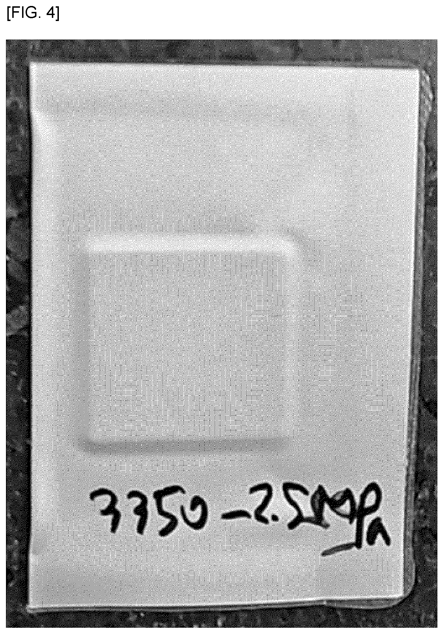

FIG. 4 is an image of the appearance of the subject with the all-solid-state battery and the pressure-sensitive member housed in a pouch and sealed.

In one example of the present invention, the subject has a pressure-sensitive member located only on an upper side of the electrode assembly, or a lower side of the electrode assembly, or on both sides of the electrode assembly.

Furthermore, a subject according to a method for evaluating pressurization of an all-solid-state battery according to one example of the present invention may comprise a plurality of electrode assemblies and a plurality of pressure-sensitive members, and if the subject comprises a plurality of electrode assemblies and a plurality of pressure-sensitive members, as described above, the plurality of pressure-sensitive members may be spaced alternately between the individual electrode assemblies constituting the plurality of electrode assemblies.

FIG. 2 illustrates a schematic view of a subject (100b) that is the subject of a method for evaluating pressurization of an all-solid-state battery according to another example of the present invention.

Referring to FIG. 2, the subject (100b) according to one example of the present invention further comprises a buffer layer (30).

The buffer layer is intended to facilitate the application of the subject to the battery, and any materials capable of preventing possible side reactions between each electrode assembly may be used for the buffer layer, for example, polymers such as polyurethane (PU) or polytetrafluoroethylene (PTFE), silicon (Si), or compounds including same, or combinations thereof, but are not limited thereto as long as such materials are commonly used in the art.

The buffer layer may also have a thickness that does not affect the operation of the battery, and may be within the thickness range commonly used in the art.

In one example of the present invention, the buffer layer is located between the all-solid-state battery and the pressure-sensitive member.

In one example of the present invention, the buffer layer is located on the lower side of the all-solid-state battery.

In one example of the present invention, the buffer layer is located between the lower side of the all-solid-state battery and the pressure-sensitive member.

If the buffer layer satisfies the above positions, it may be easier to be applied to a battery.

In one example of the present invention, the all-solid-state battery in the subject refers to an electrode assembly of the all-solid-state battery.

In one example of the present invention, the positive electrode includes a positive electrode current collector and a positive electrode active material layer.

The positive electrode current collector is a conductive member that functions as a passage for electrons to flow from the positive electrode toward an external load or from the power source toward the positive electrode, depending on the battery response.

The positive electrode current collector may typically have a thickness of 3 µm to 500 µm. The positive electrode current collector is not particularly limited as long as it has a high conductivity without causing chemical changes in the battery, for example, stainless steel, aluminum, nickel, titanium, calcined carbon, or aluminum or stainless steel whose surface is treated with carbon, nickel, titanium, or silver can be used. The current collector can also form microscopic irregularities on its surface to increase the adhesion of the positive electrode active material, and can be in various forms, such as films, sheets, foils, nets, porous materials, foams, non-woven materials, etc.

Furthermore, the positive electrode current collector may be a monolayer structure of a single material, or a laminated structure comprising layers of any suitable combination of such materials. From the perspective of reducing the weight of the current collector, it may include a conductive resin layer composed of at least a resin with conductivity.

The positive electrode active material layer may include a positive electrode active material, a solid electrolyte, a conductive material, and a binder.

The positive electrode active material is not particularly limited, as long as it is a lithium complex oxide-based material capable of reversible insertion and removal of lithium ions. For example, it may comprise one or more of complex oxides of cobalt, manganese, nickel, iron, or a combination thereof; and lithium.

As a more specific example, a compound represented by any of the following chemical formulae can be used as the positive electrode active material: LiₐA_{1-b}R_{b}D₂ (wherein 0.90 ≤ a ≤ 1.8 and 0 ≤ b ≤ 0.5); LiₐE_{1-b}R_{b}O_{2-c}D_{c} (wherein 0.90 ≤ a ≤ 1.8, 0 ≤ b ≤ 0.5, and 0 ≤ c ≤ 0.05); LiE_{2-b}R_{b}O_{4-c}D_{c} (wherein 0 ≤ b ≤ 0.5, 0 ≤ c ≤ 0.05); LiₐNi_{1-b-c}Co_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α} (wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O₂₋ₐZ₂ (wherein 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GₑO₂ (wherein 0.90 ≤ a ≤ 1.8, 0 ≤ b ≤ 0.9, 0 ≤ c ≤ 0.5, 0 ≤ d ≤0.5 and 0 ≤ e ≤ 0.1); LiₐNiG_{b}O₂ (wherein 0.90 ≤ a ≤ 1.8 and 0.001 ≤ b ≤ 0.1); LiₐCoG_{b}O₂ (wherein 0.90 ≤ a ≤ 1.8 and 0.001 ≤ b ≤ 0.1); LiₐMnG_{b}O₂ (wherein 0.90 ≤ a ≤ 1.8 and 0.001 ≤ b ≤ 0.1); LiₐMn₂G_{b}O₄ (wherein 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃ (wherein 0 ≤ f ≤ 2); Li₍₃₋ₙFe₂(PO₄)₃ (wherein 0 ≤ f ≤ 2); and LiFePO₄.

In the above formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or any combination thereof; G is Al, Cr, Mn, Fe, Mg, La, Ce, Sr, V, or any combination thereof; Q is Ti, Mo, Mn, or any combination thereof; T is Cr, V, Fe, Sc, Y, or any combination thereof; and J is V, Cr, Mn, Co, Ni, Cu, or any combination thereof.

The conductive material is not particularly limited as long as it has conductivity without causing chemical changes in the battery, for example, graphite, such as natural graphite or artificial graphite; carbon black, such as carbon black, acetylene black, ketjen black, channel black, furnace black, lamp black, or summer black; conductive fibers, such as carbon fibers or metal fibers; metal powders, such as carbon fluoride, aluminum, or nickel powder; conductive whiskers, such as zinc oxide, or potassium titanate; conductive metal oxides, such as titanium oxide; and conductive materials, such as polyphenylene derivatives.

The binder is a component added in consideration of the adhesion of the positive electrode active material, the solid electrolyte and the conductive material contained in the positive electrode active material layer, and may be of any kind available for electrode formation in the technical field in the art, for example, at least one selected from the group consisting of nitrile-butadiene rubber (NBR), polystyrene, and styrene butadiene rubber (SBR), and preferably, a binder of the butadiene rubber family, such as nitrile-butadiene rubber (NBR) or styrene butadiene rubber (SBR).

In one example of the present invention, the solid electrolyte included in the positive electrode active material layer comprises at least one of a sulfide-based solid electrolyte, an oxide-based solid electrolyte, and a polymer-based solid electrolyte.

In one example of the present invention, the solid electrolyte comprises a sulfide-based solid electrolyte.

The sulfide-based solid electrolyte included in the positive electrode active material layer may be, for example, represented by Formula 1 below.

[Formula 1] LiₐM_{b}SₒX_{d}

wherein M is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W, or La, wherein X is F, Cl, Br, I, Se, Te, or O, and wherein 0<a≤6, 0<b≤6, 0<c≤6, and 0<d≤6.

For example, in Formula 1, M can be B, Si, Ge, P, or N.

For example, in Formula 1, X can be F, CI, Br, I, or O.

For example, the sulfide-based solid electrolyte represented by Formula 1 is Li₂S-P₂S₅-LiBr, Li₂S-P₂S₅-LiCl-LiBr, Li₂S-SiS₂-LiBr, Li₂S-P₂S₅, Li₂S-P₂S₅-LiCl, Li₂S-P₂S₅-Li₂O, Li₂S-P₂S₅-Li₂O-LiI Li₂S-SiS₂, Li₂S-SiS₂-LiI, Li₂S-SiS₂-LiCl, Li₂S-SiS₂-B₂S₃-LiI, Li₂S-SiS₂-P₂S₅-LiI, Li₂S-B₂S₃, Li₂S-GeS₂, Li₂S-SiS₂-Li₃PO₄ or combinations thereof.

The sulfide-based solid electrolyte may have an argyrodite-type crystal structure. As the sulfide-based solid electrolyte has an argyrodite-type crystal structure, the sulfide-based solid electrolyte has high purity and crystallinity, and can form a stable interfacial phase, which has a high energy density and greatly improves the potential stability and ionic conductivity.

Such oxide-based solid electrolytes include, for example, compounds with NASICON structure. Examples of compounds with NASICON structure include compounds represented by the general formula Li₁₊ₓAlₓGe₂₋ₓ(PO₄)₃ (wherein 0 ≤ x ≤ 2) (LAGP), and compounds represented by the general formula Li₁₊ₓAlₓTi₂₋ₓ(PO₄)₃ (wherein 0 ≤ x ≤ 2) (LATP). Other examples of oxide-based solid electrolytes include LiLaTiO (for example, Li_{0.34}La_{0.51}TiO₃), LiPON (for example, Li_{2.9}PO_{3.3}N_{0.46}), and LiLaZrO (for example, Li₇La₃Zr₂O₁₂).

The shape of the solid electrolyte may be, for example, a particle shape such as a spherical shape or an elliptical shape, a thin film shape, or the like, but when the shape of the solid electrolyte is a particle shape, the average particle size may be 0.1 to 5 µm.

The positive electrode active material layer can be prepared according to methods well known in the art, and is not limited to a particular method of preparation, but can be prepared, for example, by a dry electrode process method in which a dough is prepared by mixing the positive electrode active material, a solid electrolyte, a conductive material and a binder, and then sheeting the dough, or by a wet process in which a slurry of positive electrode compound is prepared by mixing in a solvent and applying this positive electrode compound to the positive electrode current collector.

The positive electrode active material layer may further comprise, in addition to the positive electrode active material, solid electrolyte, conductive material and binder described above, additives such as, for example, fillers, coatings, dispersants, ionic conductivity aids and the like. The fillers, coatings, dispersants, ionic conductivity aids, and the like can be any of the known materials typically used for electrodes in all-solid-state batteries.

The thickness of the positive electrode active material layer can be varied depending on the intended configuration of the all-solid-state battery, but is preferably in the range of 0.1 µm to 1,000 µm, for example, and more preferably in the range of 40 µm to 100 µm.

The solid electrolyte layer is a layer interposed between the positive electrode and negative electrode comprising solid electrolyte as a main component. The solid electrolyte layer comprises a solid electrolyte, and the solid electrolyte may be the same as or different from the solid electrolyte contained in the positive electrode active material layer, and the specific types thereof are the same as described in the positive electrode active material layer, so that a specific description thereof will be omitted.

The elastic modulus, or Young's modulus, of the solid electrolyte layer may be, for example, 35 GPa or less, 30 GPa or less, 27 GPa or less, 25 GPa or less, 23 GPa or less. The elastic modulus, or Young's modulus, of the solid electrolyte layer may be, for example, 10 to 35 GPa, 15 to 35 GPa, 15 to 30 GPa, or 15 to 25 GPa. As the solid electrolyte layer has an elastic modulus in this range, pressurization and/or sintering of the solid electrolyte contained in the solid electrolyte layer can be more easily accomplished.

The solid electrolyte layer further comprises, for example, a binder. The binder included in the solid electrolyte layer may be, for example, but not limited to, styrene butadiene rubber (SBR), polytetrafluoroethylene, polyvinylidene fluoride, polyvinylidene fluoride, polyethylene, or any other binder used in the art. The binder of the solid electrolyte layer may be the same as or different from the binder of the positive electrode active material layer.

The thickness of the solid electrolyte layer may be variable depending on the configuration of the intended all-solid-state battery, and from the point of view of improving the volume energy density of the battery, may preferably be 600 µm or less, more preferably 500 µm or less, or 400 µm or less. On the other hand, there is no particular limitation on the lower limit value of the thickness of the solid electrolyte layer, but it may preferably be 1 µm or more, 5 µm or more, or 10 µm or more.

The negative electrode may include a negative electrode active material layer and a negative electrode current collector.

The negative electrode current collector is a conductive member that functions as a passage for electrons to emit from the negative electrode towards the power source or flow from an external load towards the negative electrode, depending on the charge and discharge behavior of the battery, wherein the negative electrode current collector consists of, for example, a material that does not react with lithium, i.e., does not form both alloys and compounds. The material consisting of the negative electrode current collector may be, for example, but not necessarily limited to, copper (Cu), stainless steel, titanium (Ti), iron (Fe), cobalt (Co), and nickel (Ni), as long as it is used as an electrode current collector in the art. The negative electrode current collector may consist of one of the metals described above, or may consist of an alloy or coating material of two or more metals. The negative electrode current collector is, for example, in the form of a plate or foil.

The negative electrode active material layer comprises, for example, a negative electrode active material forming an alloy or compound with lithium.

The negative electrode active material comprised in the negative electrode active material layer may be, for example, in the form of particles.

The negative electrode active material comprised in the negative electrode active material layer includes, for example, one or more selected from a carbon-based negative electrode active material and a metallic or semi-metallic negative electrode active material.

Carbon-based negative electrode active material is specifically an amorphous carbon. Amorphous carbon can be, for example, but not necessarily limited to, carbon black (CB), acetylene black (AB), furnace black (FB), ketjen black (KB), graphene, or any other material that is classified as amorphous carbon in the art. Amorphous carbon is carbon that is not crystalline or has very low crystallinity, which is distinguished from crystalline or graphitic carbon.

The metallic or semi-metallic negative electrode active material includes at least one selected from the group consisting of gold (Au), platinum (Pt), palladium (Pd), silicon (Si), silver (Ag), aluminum (Al), bismuth (Bi), tin (Sn), and zinc (Zn), but is not necessarily limited thereto, and any material used as a metallic negative electrode active material or semi-metallic negative electrode active material forming an alloy or compound with lithium in the art can be used. For example, nickel (Ni) is not a metallic negative electrode active material because it does not form an alloy with lithium.

The negative electrode active material layer may comprise any one of these negative electrode active materials, or may comprise a mixture of a plurality of different negative electrode active materials. For example, the negative electrode active material layer comprises only amorphous carbon, or comprises one or more selected from the group consisting of gold (Au), platinum (Pt), palladium (Pd), silicon (Si), silver (Ag), aluminum (Al), bismuth (Bi), tin (Sn), and zinc (Zn). In another example, the negative electrode active material layer comprises a mixture of amorphous carbon and one or more selected from the group consisting of gold (Au), platinum (Pt), palladium (Pd), silicon (Si), silver (Ag), aluminum (Al), bismuth (Bi), tin (Sn), and zinc (Zn). The mixing ratio of amorphous carbon and silver (Ag), for example, is weight ratio of 10:1 to 1:2, 5:1 to 1:1, or 4:1 to 2:1, but is not necessarily limited to these ranges and is selected based on the required properties of the all-solid-state battery.

The negative electrode active material comprised in the negative electrode active material layer comprises, for example, a mixture of first particles consisting of amorphous carbon and second particles consisting of metal or semi-metal. Metal or semi-metal includes, for example, gold (Au), platinum (Pt), palladium (Pd), silicon (Si), silver (Ag), aluminum (Al), bismuth (Bi), tin (Sn), and zinc (Zn). A semi-metal is otherwise a semiconductor. The content of the second particles is 8 to 60% by weight, 10 to 50% by weight, 15 to 40% by weight, or 20 to 30% by weight, based on the total weight of the mixture.

The negative electrode active material layer comprises, for example, a binder. The binder may be, for example, but not necessarily limited to, styrene-butadiene rubber (SBR), polytetrafluoroethylene, polyvinylidene fluoride, polyethylene, vinylidene fluoride/hexafluoropropylene copolymer, polyacrylonitrile, polymethylmethacrylate, or the like, as long as they are used as binders in the art. A binder can consist of a single or multiple different binders.

The negative electrode active material layer includes a binder to stabilize the negative electrode active material layer on the negative electrode current collector. Furthermore, cracking of the negative electrode active material layer is suppressed despite volume changes and/or relative position changes of the negative electrode active material layer during charge and discharge. For example, if the negative electrode active material layer does not contain a binder, it is possible for the negative electrode active material layer to be easily separated from the negative electrode current collector. Where the negative electrode active material layer deviates from the negative electrode current collector, the negative electrode current collector is exposed and comes into contact with the solid electrolyte layer, thereby increasing the likelihood of a short circuit. The negative electrode active material layer is produced, for example, by applying a slurry in which the material constituting the negative electrode active material layer is dispersed onto a negative electrode current collector and drying it. Incorporating the binder into the negative electrode active layer enables stable dispersion of the negative electrode active material layer within the slurry. For example, when applying a slurry onto a negative electrode current collector by screen printing, it is possible to prevent clogging of the screen (e.g., clogging by the agglomerate in the negative electrode active material).

The negative electrode may further comprise additives used in conventional all-solid-state batteries, such as fillers, dispersants, ionic conductors, and the like.

The all-solid-state battery may be prepared by manufacturing such a positive electrode, a solid electrolyte layer and a negative electrode, respectively, and then stacking them in sequence.

In one example of the present invention, the electrode assembly stacked in the above sequence may be a structure housed in a case, such as a pouch. All-solid-state batteries can also be made by stacking two or more electrode assemblies.

The pressure-sensitive member refers to a material capable of measuring whether pressure is applied and the amount thereof, and in the present invention, a pressure-sensitive member may be of any type as long as it is capable of measuring whether pressure is applied to the subject and evaluating the amount of pressure applied, but for example, a pressure-sensitive paper may be utilized as the pressure-sensitive member.

In one example of the present invention, the pressure-sensitive member is a pressure-sensitive paper that develops color upon being compressed.

The pressure-sensitive paper is a paper that changes color depending on the state of pressure application, and if no discolored areas appear on the pressure-sensitive paper, it can be seen that the pressure is not applied to that part. This pressure-sensitive paper is coated with microcapsules and a developer on a substrate, and when pressure is applied, a specific color develops. Also, the intensity of the color changes depending on the magnitude of the applied pressure, with higher pressures resulting in darker colors. Therefore, by visually inspecting the areas on the pressure-sensitive paper where the color appears darker, it can be determined that higher pressure was applied to those areas. In other words, if the pressure-sensitive member is a pressure-sensitive paper that develops color upon being compressed, the pressure applied to the subject can be measured based on the color development state of the pressure-sensitive paper.

Commercially available pressure-sensitive paper, such as Fujifilm's "prescale," can measure applied pressures across seven ranges depending on the pressure level: micro-pressure (0.05 MPa to 0.2 MPa), ultra-low pressure (0.2 MPa to 0.6 MPa), super-low pressure (0.5 MPa to 2.5 MPa), low pressure (2.5 MPa to 10 MPa), medium pressure (10 MPa to 50 MPa), high pressure (50 MPa to 130 MPa), and ultra-high pressure (130 MPa to 300 MPa).

The discoloration observed on the pressure-sensitive member can be compared with references such as standard color samples, allowing the magnitude of the pressure applied to the subject to be measured through a visual evaluation of the discoloration intensity on the pressure-sensitive member.

In one example of the present invention, the pressure-sensitive member is included in the subject in a number of n (where n is an integer greater than or equal to 1).

In one example of the present invention, the subject comprises all-solid-state batteries in a number of p and pressure-sensitive members in a number of q (where p and q are the same or different from each other, each independently an integer greater than or equal to 1), and the pressure-sensitive members are included between each of the all-solid-state batteries based on when the all-solid-state batteries in a number of p are stacked sequentially.

In one example of the present invention, the subject includes m+1 or more pressure-sensitive members when m all-solid-state batteries (where m is an integer equal to or greater than 1) are included in the subject, wherein the subject contains pressure-sensitive members on both the upper and lower sides, and, based on the sequential stacking of the m all-solid-state batteries, the pressure-sensitive members are interposed between each all-solid-state battery.

The evaluation method according to one example of the present invention includes pressure-sensitive members on the upper side and the lower side of the subject, and by including pressure-sensitive members between the all-solid-state batteries, the pressurization evaluation can be performed even for a plurality of all-solid-state batteries, and the efficiency of the evaluation can be improved accordingly.

Next, (step (2)) the subject is pressurized in the thickness direction of the all-solid-state battery using a pressurizing means.

The specific composition of the subject is the same as described in step (1) above, so the specific description is omitted below.

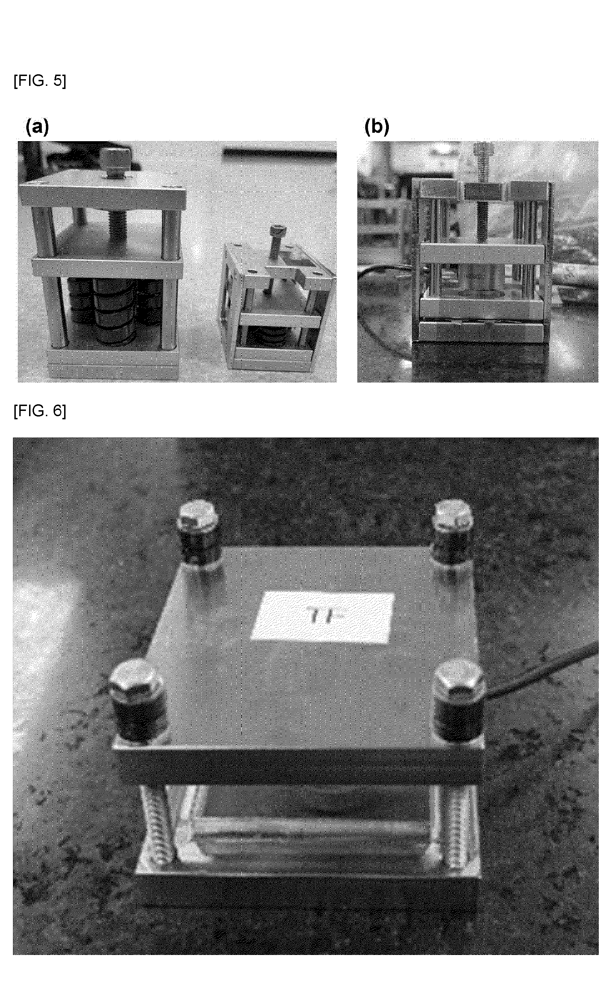

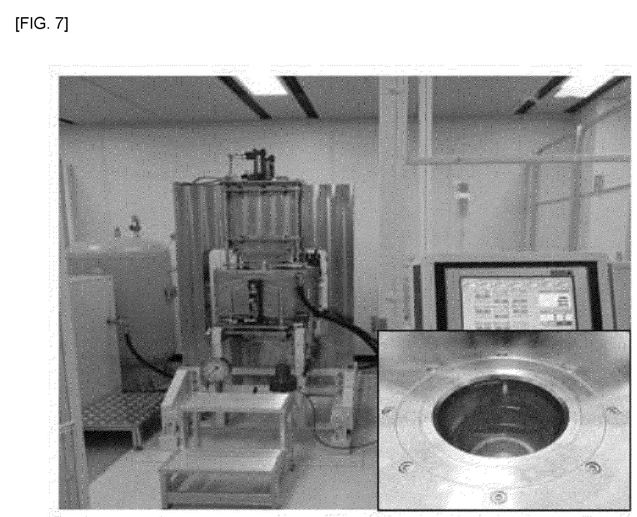

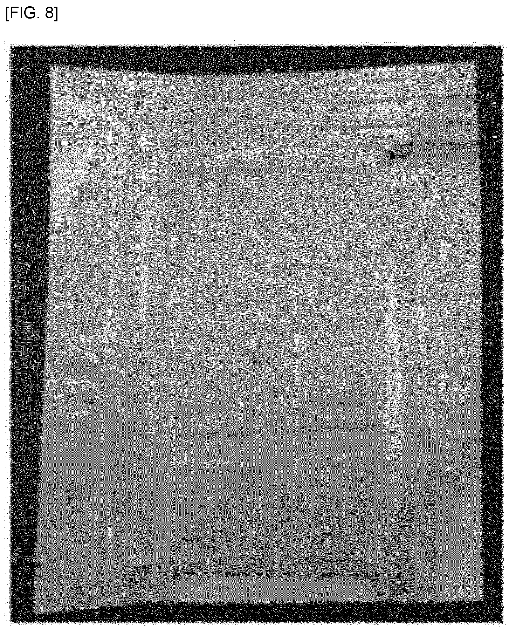

The pressurizing means may be any means capable of applying pressure to the subject, for example, a pressurizing means using a device comprising a hydraulic press, more specifically a hand hydraulic press. A representative example is a "jig" that is mainly used to apply pressure or clamping pressure to the driving process of an all-solid-state battery, and the jig includes a spring-type jig as shown in FIG. 5 and a washer-type jig as shown in FIG. 6. Furthermore, a warm isostatic press (WIP) as shown in FIG. 7 can be used as the pressurizing means, and specifically, a subject prepared by the warm isostatic press as shown in FIG. 7 can be as shown in FIG. 8.

In one example of the present invention, the pressurizing means is a device comprising a hydraulic press operated by a jig or a warm hydrostatic press. The pressure in the thickness direction means that the pressure is applied in the perpendicular direction with respect to the plane on which the all-solid-state battery and the pressure-sensitive member are stacked.

In one example of the present invention, the ratio (a/b) of the size (a) of the cross-sectional area of the portion of the pressurizing means in contact with the subject and the size (b) of the cross-sectional area of the portion of the subject in contact with the pressurizing means at the time of pressurizing in step (2) is at least 8:1. Specifically, the ratio (a/b) of the cross-sectional area sizes may be 8:1 or greater, 9:1 or greater, 10:1 or greater, 11:1 or greater, 12:1 or greater, 13:1 or greater, or 14:1 or greater. When the ratio (a/b) of the cross-sectional area sizes satisfies the above range, the pressurization can be uniformly applied to the entire subject, and the degree of pressurization can be evaluated even with a low pressure.

If the ratio (a/b) of the cross-sectional area size is 8:1 or more, uniform pressurization can be achieved, and it may have a value significantly greater than 8:1 in consideration of evaluating the pressurization of a plurality of subjects, but it may be 100:1 or less in consideration of economic aspects for commercial use. Specifically, it can be 100:1 or less, 90:1 or less, 80:1 or less, 70:1 or less, 60:1 or less, 50:1 or less, 40:1 or less, 30:1 or less, or 20:1 or less.

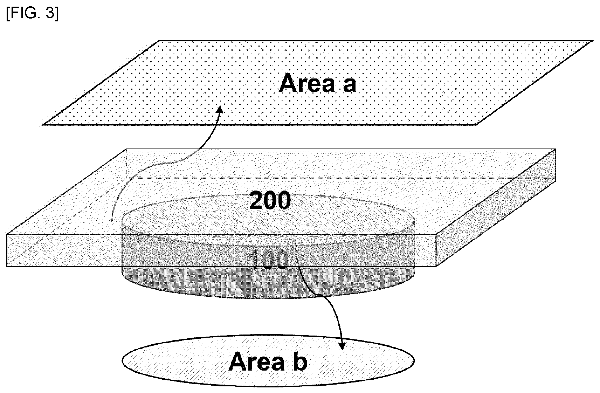

FIG. 3 is a schematic diagram illustrating the contact of the pressurizing means with the subject during pressurization according to one example of the present invention.

Referring to FIG. 3, the magnitude (a) of the cross-sectional area of the portion of the pressurizing means (200) in contact with the subject (100) means the area of the side of the pressurizing means (200) that is in contact with the subject (100), and the magnitude (b) of the cross-sectional area of the portion of the subject (100) in contact with the pressurizing means (200) means the area of the side of the subject (100) that is in contact with the pressurizing means (200).

In one example of the present invention, the pressure to be applied in step (2) for the evaluation is 0.05 MPa to 10 MPa. Specifically, it may be 0.05 MPa or more, 0.1 MPa or more, 0.5 MPa or more, 1 MPa or more, 1.5 MPa or more, 2 MPa or more, or 10 MPa or less, 9.5 MPa or less, 9 MPa or less, 8.5 MPa or less, 8 MPa or less, 7.5 MPa or less, 7 MPa or less, 6.5 MPa or less, 6 MPa or less, 5.5 MPa or less, 5 MPa or less, 4.5 MPa or less, 4 MPa or less, 3.5 MPa or less, 3 MPa or less, or 2.5 MPa or less, and may be 0.05 MPa to 10 MPa, 1 MPa to 8 MPa, or 1 MPa to 6 MPa.

The evaluation method according to one example of the present invention is capable of uniformly pressurizing a subject even with a relatively low pressurization pressure, thereby enabling an evaluation of the degree of pressurization with a low pressurization pressure. When the pressurization pressure meets the above range, the efficiency and economy of the evaluation can be improved.

Next, (step (3)) the image information of the pressure-sensitive member is obtained after the pressurization in step (2) above, and (step (4)) the pressure distribution of the all-solid-state battery is determined from the obtained image information of the pressure-sensitive member.

A pressure applied perpendicularly to a pressure-sensitive member located on at least one side of an all-solid-state battery in the subject is transmitted as a visual image through the pressure-sensitive member, wherein the visual image allows pressure information to be obtained regarding the pressure applied to the pressure-sensitive member, and, further, the adjacent all-solid-state battery. In other words, the method for evaluating pressurization of an all-solid-state battery according to the present invention has the advantage that the process of acquiring information on the intensity of the pressure applied to the all-solid-state battery and the uniformity of the pressure through the degree of discoloration, the area of the discoloration, and the distribution of the discolored area in the pressurization member using the pressure-sensitive member included in the subject is conveyed as visual image information, which facilitates the pressurization evaluation, and is convenient in that no separate power source is required for the pressurization evaluation, and the size can be adjusted according to the size of the subject.

In one example of the present invention, the step of acquiring image information of the pressure-sensitive member in step (3) is to obtain information about the intensity of the pressure applied to the all-solid-state battery and the uniformity of the pressure through the degree of discoloration, the area of discoloration and the distribution of the discolored areas in the pressure-sensitive member.

In one example of the present invention, when the pressure-sensitive member is included in the subject in a number of n (where n is an integer greater than or equal to 1), the image information of the pressure-sensitive member in step (3) corresponds the information of the pressure-sensitive member located at the n/2-th or (n/2)+1-th position when n is an even number, and the information of the pressure-sensitive member located at the (n+1)/2-th position when n is an odd number, based on the sequential stacking of the n pressure-sensitive member. For example, if a subject contains 8 pressure-sensitive members, an even number, the image information of the pressure-sensitive member corresponds to the image information of the pressure-sensitive member located at the n/2-th or (n/2)+1-th position, which corresponds to the 4th position or the 5th position, respectively, based on the stacked order of the members. Alternatively, if the subject contains 9 pressure-sensitive members, an odd number, the image information of the pressure-sensitive member corresponds to the image information of the pressure-sensitive member located at the (n+1)/2-th position, which corresponds to the 5th position, based on the stacked order of the members.

In other words, in the method for evaluating pressurization of an all-solid-state battery according to the present invention, when the subject includes a plurality of pressure-sensitive members, by acquiring image information of the innermost pressure-sensitive member based on the order in which the plurality of pressure-sensitive members are stacked, it is possible to confirm and evaluate whether the pressure applied by the pressurizing means can be transmitted intact to the interior of the all-solid-state battery, and the image information of the pressure-sensitive member can be utilized for improving the interface properties of the positive electrode active material and the solid electrolyte, which can directly affect the operation and life characteristics of the all-solid-state battery.

In one example of the present invention, the step of determining the pressure distribution of the all-solid-state battery by the image information of the pressure-sensitive member obtained in step (4) is to obtain color information of a plurality of unit inspection areas in the image of the pressure-sensitive member, calculate an average value thereof, and determine the pressure distribution of the all-solid-state battery by comparing the average value with a standard color sample of the pressure-sensitive member.

Even when pressure is applied through the pressurizing means, there may be cases in which the same pressure is not applied to the entire area of the pressure-sensitive member, and in this case, the method for evaluating pressurization of an all-solid-state battery according to the present invention may include dividing the pressure-sensitive member that has undergone a 2-step pressurization process into a plurality of arbitrary unit inspection areas, obtaining color image information of each of the divided areas, calculating an average value thereof, and then comparing the calculated average value with a reference such as a standard color sample to determine the pressure distribution of the all-solid-state battery according to the obtained image information.

In one example of the present invention, prior to pressurization in step (2), at least one of upper side or lower side of the subject in step (1) further comprises an elastic member.

The elastic member may be represented by a reinforcement material, a buffer layer, or an elastic layer, and serves to ensure that the pressure applied to the electrode assembly comprising an all-solid-state battery is transmitted uniformly, thereby ensuring good contact of the solid components contained in the all-solid-state battery, and to ensure that uniform pressure is applied to the pressure-sensitive member capable of acquiring image information by externally applied pressure. The material for the elastic member may be any of, but not limited to, polytetrafluoroethylene (PTFE), silicone, organic rubber, polyurethane, polystyrene, polyethylene, polypropylene, ethylene vinyl acetate (EVA), and polyethylene terephthalate (PET).

### Apparatus for evaluating pressurization of all-solid-state battery

The present invention also provides an apparatus for evaluating pressurization of an all-solid-state battery.

In one example of the present invention, the apparatus for evaluating pressurization of an all-solid-state battery comprises: a subject having a pressure-sensitive member located on at least one of an upper side or a lower side of the all-solid-state battery comprising a positive electrode, a negative electrode, and a solid electrolyte layer located between the positive electrode and negative electrode; and a pressurizing means for applying pressure to the subject, imparting image information to the pressure-sensitive member to determine a pressure distribution.

The positive electrode, negative electrode, and solid electrolyte layer of the all-solid-state battery included in the subject, and the pressure-sensitive member, are the same as described in the above pressurization evaluation method of the all-solid-state battery, so the specific description will be omitted.

In one example of the present invention, the subject further comprises a buffer layer.

The buffer layer is intended to facilitate the application of the subject to the battery, and any materials capable of preventing possible side reactions between each electrode assembly may be used for the buffer layer, for example, polymers such as polyurethane (PU) or polytetrafluoroethylene (PTFE), silicon (Si), or compounds including same, or combinations thereof, but are not limited thereto as long as such materials are commonly used in the art.

The buffer layer may also have a thickness that does not affect the operation of the battery, and may be within the thickness range commonly used in the art.

In one example of the present invention, the buffer layer is located between the all-solid-state battery and the pressure-sensitive member.

In one example of the present invention, the buffer layer is located on the lower side of the all-solid-state battery.

In one example of the present invention, the buffer layer is located between the lower side of the all-solid-state battery and the pressure-sensitive member.

If the buffer layer satisfies the above positions, it may be easier to be applied to a battery.

In one example of the present invention, the all-solid-state battery in the subject refers to an electrode assembly of the all-solid-state battery.

The pressurizing means for pressurizing the subject may be any means capable of applying pressure to the subject, for example, a pressurizing means using a device comprising a hydraulic press, more specifically a hand hydraulic press. A representative example is a "jig" that is mainly used to apply pressure or clamping pressure to the driving process of an all-solid-state battery, and the jig includes a spring-type jig as shown in FIG. 5 and a washer-type jig as shown in FIG. 6. Furthermore, a warm isostatic press (WIP) as shown in FIG. 7 can be used as the pressurizing means, and specifically, a subject prepared by the warm isostatic press as shown in FIG. 7 can be as shown in FIG. 8.

In one example of the present invention, the pressurizing means is a device comprising a hydraulic press operated by a jig or a warm hydrostatic press.

In one example of the present invention, the pressure applied to the subject is applied in the direction of the thickness of the all-solid-state battery. The pressure in the thickness direction means that the pressure is applied in the perpendicular direction with respect to the plane on which the all-solid-state battery and the pressure-sensitive member are stacked.

In one example of the present invention, the ratio (a/b) of the size (a) of the cross-sectional area of the portion of the pressurizing means in contact with the subject and the size (b) of the cross-sectional area of the portion of the subject in contact with the pressurizing means at the time of pressurizing the subject is at least 8:1. Specifically, the ratio (a/b) of the cross-sectional area sizes may be 8:1 or greater, 9:1 or greater, 10:1 or greater, 11:1 or greater, 12:1 or greater, 13:1 or greater, or 14:1 or greater. When the ratio (a/b) of the cross-sectional area sizes satisfies the above range, the pressurization can be uniformly applied to the entire subject, and the degree of pressurization can be evaluated even with a low pressure.

If the ratio (a/b) of the cross-sectional area size is 8:1 or more, uniform pressurization can be achieved, and it may have a value significantly greater than 8:1 in consideration of evaluating the pressurization of a plurality of subjects, but it may be 100:1 or less in consideration of economic aspects for commercial use. Specifically, it can be 100:1 or less, 90:1 or less, 80:1 or less, 70:1 or less, 60:1 or less, 50:1 or less, 40:1 or less, 30:1 or less, or 20:1 or less.

A pressure applied perpendicularly to a pressure-sensitive member located on at least one side of an all-solid-state battery in the subject is transmitted as a visual image through the pressure-sensitive member, wherein the visual image allows pressure distribution information to be obtained regarding the pressure applied to the pressure-sensitive member, and, further, the adjacent all-solid-state battery. In other words, the apparatus for evaluating pressurization of an all-solid-state battery according to the present invention has the advantage that the process of acquiring information on the intensity of the pressure applied to the all-solid-state battery and the uniformity of the pressure through the degree of discoloration, the area of the discoloration, and the distribution of the discolored area in the pressurization member using the pressure-sensitive member included in the subject is conveyed as visual image information, which facilitates the pressurization evaluation, and is convenient in that no separate power source is required for the pressurization evaluation, and the size can be adjusted according to the size of the subject.

In one example of the present invention, the apparatus for evaluating pressurization obtains information about the intensity of the pressure applied to the all-solid-state battery and the uniformity of the pressure through the degree of discoloration, the area of discoloration and the distribution of the discolored areas in the pressure-sensitive member.

In one example of the present invention, the pressure-sensitive member is included in the subject in a number of n (where n is an integer greater than or equal to 1). For example, the image information of the pressure-sensitive member may corresponds to the information of the pressure-sensitive member located at the n/2-th or (n/2)+1-th position when n is an even number, and the information of the pressure-sensitive member located at the (n+1)/2-th position when n is an odd number, based on the sequential stacking of the n pressure-sensitive member. Specifically, if a subject contains 8 pressure-sensitive members, an even number, the image information of the pressure-sensitive member corresponds to the image information of the pressure-sensitive member located at the n/2-th or (n/2)+1-th position, which corresponds to the 4th position or the 5th position, respectively, based on the stacked order of the members. Alternatively, if the subject contains 9 pressure-sensitive members, an odd number, the image information of the pressure-sensitive member corresponds to the image information of the pressure-sensitive member located at the (n+1)/2-th position, which corresponds to the 5th position, based on the stacked order of the members.

In other words, in the apparatus for evaluating pressurization of an all-solid-state battery according to the present invention, when the subject includes a plurality of pressure-sensitive members, by acquiring image information of the innermost pressure-sensitive member based on the order in which the plurality of pressure-sensitive members are stacked, it is possible to confirm and evaluate whether the pressure applied by the pressurizing means can be transmitted intact to the interior of the all-solid-state battery, and the image information of the pressure-sensitive member can be utilized for improving the interface properties of the positive electrode active material and the solid electrolyte, which can directly affect the operation and life characteristics of the all-solid-state battery.

In one example of the present invention, the subject comprises all-solid-state batteries in a number of p and pressure-sensitive members in a number of q (where p and q are the same or different from each other, each independently an integer greater than or equal to 1), and the pressure-sensitive members are included between each of the all-solid-state batteries based on when the all-solid-state batteries in a number of p are stacked sequentially.

In one example of the present invention, the subject includes m+1 or more pressure-sensitive members when m all-solid-state batteries (where m is an integer equal to or greater than 1) are included in the subject, wherein the subject contains pressure-sensitive members on both the upper and lower sides, and, based on the sequential stacking of the m all-solid-state batteries, the pressure-sensitive members are interposed between each all-solid-state battery.

The evaluation apparatus according to one example of the present invention includes pressure-sensitive members on the upper side and the lower side of the subject, and by including pressure-sensitive members between the all-solid-state batteries, the pressurization evaluation can be performed even for a plurality of all-solid-state batteries, and the efficiency of the evaluation can be improved accordingly.

In one example of the present invention, the pressure-sensitive member is a pressure-sensitive paper that develops color upon being compressed.

The pressure-sensitive paper is a paper that changes color depending on the state of pressure application, and if no discolored areas appear on the pressure-sensitive paper, it can be seen that the pressure is not applied to that part. This pressure-sensitive paper is coated with microcapsules and a developer on a substrate, and when pressure is applied, a specific color develops. Also, the intensity of the color changes depending on the magnitude of the applied pressure, with higher pressures resulting in darker colors. Therefore, by visually inspecting the areas on the pressure-sensitive paper where the color appears darker, it can be determined that higher pressure was applied to those areas. In other words, if the pressure-sensitive member is a pressure-sensitive paper that develops color upon being compressed, the pressure applied to the subject can be measured based on the color development state of the pressure-sensitive paper.

Commercially available pressure-sensitive paper, such as Fujifilm's "prescale," can measure applied pressures across seven ranges depending on the pressure level: micro-pressure (0.05 MPa to 0.2 MPa), ultra-low pressure (0.2 MPa to 0.6 MPa), super-low pressure (0.5 MPa to 2.5 MPa), low pressure (2.5 MPa to 10 MPa), medium pressure (10 MPa to 50 MPa), high pressure (50 MPa to 130 MPa), and ultra-high pressure (130 MPa to 300 MPa).

The discoloration observed on the pressure-sensitive member can be compared with references such as standard color samples, allowing the magnitude of the pressure applied to the subject to be measured through a visual evaluation of the discoloration intensity on the pressure-sensitive member.

In one example of the present invention, at least one of the upper or lower side of the subject may further comprise an elastic member.

The elastic member may be represented by a reinforcement material, a buffer layer, or an elastic layer, and serves to ensure that the pressure applied to the electrode assembly comprising an all-solid-state battery is transmitted uniformly, thereby ensuring good contact of the solid components contained in the all-solid-state battery, and to ensure that uniform pressure is applied to the pressure-sensitive member capable of acquiring image information by externally applied pressure. The material for the elastic member may be any of, but not limited to, polytetrafluoroethylene (PTFE), silicone, organic rubber, polyurethane, polystyrene, polyethylene, polypropylene, ethylene vinyl acetate (EVA), and polyethylene terephthalate (PET).

### [Mode for Practicing the Invention]

Specific examples of the present invention are described below. However, the examples described below are intended only to specifically illustrate or describe the present invention and are not intended to limit the present invention. Furthermore, any matter not described herein can be sufficiently inferred by a person skilled in the art, and is hereby omitted.

### Manufacturing Example: Preparation of subject for evaluation of pressurization of all-solid-state battery

### (1) Manufacturing of positive electrode

Based on a total of 100 parts by weight of the positive electrode layer, 78 parts by weight of LiNi_{0.8}Co_{0.1}Mn_{0.1}O₂ powder with a particle size (D50) of 5 µm as the positive electrode active material, 19.5 parts by weight of lithium argyrodite-type solid electrolyte Li₆PS₅Cl, 1.5 parts by weight of carbon black conductive material, and 1.0 parts by weight of styrene butadiene rubber (SBR) binder were added to a xylene solvent, 2 mm zirconia ball was added, and they were stirred with a sink-type mixer to prepare a slurry.

The prepared slurry was applied to one side of the aluminum current collector with a thickness of 15 µm, as the positive electrode current collector, and dried in a vacuum oven at 100°C for 8 hours to prepare the positive electrode of an all-solid-state battery.

### (2) Preparation of solid electrolyte layer

To a binder solution of an acrylic-based binder (SX-A334, Zeon) dissolved in isobutyl isobutyrate (IBIB) solvent, lithium argyrodite-type solid electrolyte Li6PS5Cl was added and stirred in a sink-type mixer to adjust to the appropriate viscosity. After adjusting the viscosity, 2 mm zirconia ball was added and stirred again with a sink-type mixer to make a slurry. The slurry contains 98.5% by weight solid electrolyte and 1.5% by weight binder. The slurry was applied by a bar coater on a release PET film and dried at room temperature to prepare a solid electrolyte layer.

### (3) Manufacturing of all-solid-state battery electrode assembly

The prepared positive electrode was cut together with a solid electrolyte, a lithium metal with a thickness of 100 µm was used as a negative electrode, and the positive electrode, solid electrolyte layer, and negative electrode current collector are sequentially stacked and sealed in a pouch, and subjected to high temperature at 80°C and 500 MPa for 30 minutes, and then subjected to a warm isostatic press (WIP) to produce an all-solid-state battery electrode assembly. In the pressurized state, the thickness of the positive electrode was about 100 µm, the thickness of the negative electrode was about 100 µm, and the thickness of the solid electrolyte layer was about 60 µm.

### (4) Preparation of subject for pressurization evaluation

A 0.2 mm thick polyurethane (PU) pad was used as a buffer layer, an 18 mm × 18 mm pressure-sensitive paper (Fujifilm's Prescale^{™}, for low pressure conditions) was used as a pressure-sensitive member, and a buffer layer and a pressure-sensitive member were sequentially positioned below the electrode assembly prepared above, thereby to prepare one set of "all-solid-state battery electrode assembly - buffer layer - pressure-sensitive paper." 3 sets of the above-mentioned "all-solid-state battery electrode assembly - buffer layer - pressure-sensitive paper" were prepared, placed in a laminated pouch, and vacuum sealed at -100 kPa to prepare a subject for pressurization evaluation. A subject for pressurization evaluation prepared as described above is shown in FIG. 4.

### Example 1: Pressurization evaluation of all-solid-state battery (1)

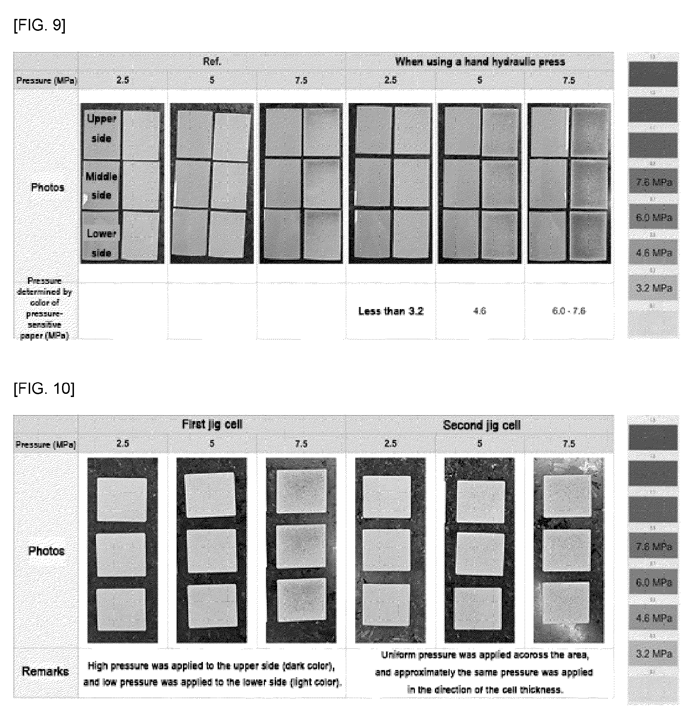

A subject for pressurization evaluation prepared in the above manufacturing example was installed in a jig cell, and a pressure of 2.5 MPa, 5.0 MPa, and 7.5 MPa was applied in the direction of the thickness of the subject, as shown in FIG. 9, using pressurizing means of 1) pressurizing the subject using a torque wrench and 2) pressurizing the jig cell by applying hydraulic pressure to the subject, respectively. Method 1) above is a method of placing aluminum fixed jig plates on the upper and lower sides of the subject, and pressing the bolts/nuts located at the square corners of the fixed jig plates using a torque wrench, and method 2) above is a method of pressing the fixed jig plates located on the upper and lower sides of the subject directly by hydraulic pressure.

The subject was installed inside the jig cell with 0.2 mm thick polyurethane (PU) pads placed on the upper and lower sides of the subject as elastic members.

The pouch of the subject that had been pressurized was disassembled to obtain image information according to the color change of the internal pressure-sensitive paper, and then compared to a standard color sample to determine the pressure distribution applied to the all-solid-state battery. The results are shown in FIG. 6.

Referring to FIG. 9, it can be seen that when pressure was applied to the subject by "1) pressurizing using a torque wrench", the color of the pressure-sensitive paper changed only when a relatively high pressure of 5.0 MPa or more was applied, and even when a pressure of 7.5 MPa was applied, the pressure was not applied uniformly. On the other hand, when the subject was pressurized by "2) pressurizing the jig cell by applying hydraulic pressure", it can be seen that the subject was pressurized even at a relatively low pressure (2.5 MPa), and the pressure was applied uniformly in both the area and thickness directions of the subject.

### Example 2: Pressurization evaluation of all-solid-state battery (2)

A subject for pressurization evaluation prepared in the above manufacturing example was installed in two jig cells (first jig cell and second jig cell) each comprising a fixed jig plate of different area sizes to apply pressure in the thickness direction of the subject. The fixed jig plate of the first jig cell is 770 area% of the subject area, and the fixed jig plate of the second jig cell is 1,480 area% of the subject area.

The pouch of each subject that had been pressurized was disassembled to obtain image information according to the color change of the internal pressure-sensitive paper, and then compared to a standard color sample to determine the pressure distribution applied to the all-solid-state battery. The results are shown in FIG. 6.

Referring to FIG. 10, it can be seen that when pressure was applied to the subject by the "1) first jig cell," a relatively high pressure was applied to the pressure-sensitive paper located at the upper side of the subject, and the applied pressure was not effectively transmitted to the pressure-sensitive paper located at the lower side of the subject. In addition, it can be seen that the relatively low pressure of 5 MPa was difficult to apply to the subject when the pressure was applied to the subject using the first jig cell, which is relatively small compared to the second jig cell.

On the other hand, when pressure was applied to the subject using the "2) second jig cell", it can be seen that uniform pressure was applied in the area direction and thickness direction of the subject at both relatively high and low pressures.

While preferred examples of the present invention have been described in detail above, the scope of the invention is not limited thereto, and various modifications and improvements by those skilled in the art utilizing the basic concepts of the invention as defined by the following claims are also within the scope of the invention.

### [Reference Numerals]

10: Pressure-sensitive member
20: Electrode assembly
30: Buffer layer
50: Exterior material
100: Subject
100a: Subject according to one example of the present invention.
100b: Subject according to another example of the present invention
200: Pressurizing means

## Claims

1. A method for evaluating pressurization of an all-solid-state battery containing a solid electrolyte, comprising:
(1) preparing a subject by positioning a pressure-sensitive member on at least one of an upper side or a lower side of an all-solid-state battery comprising a positive electrode, a negative electrode, and a solid electrolyte layer located between the positive electrode and negative electrode;
(2) pressing the subject in the thickness direction of the all-solid-state battery using a pressurizing means;
(3) acquiring image information of the pressure-sensitive member after pressurization in step (2) above; and
(4) determining the pressure distribution of the all-solid-state battery from the obtained image information of the pressure-sensitive member.

2. The method for evaluating pressurization of an all-solid-state battery according to claim 1,
wherein the step of obtaining image information of the pressure-sensitive member in step (3) above is obtaining information about the intensity of the pressure applied to the all-solid-state battery and the uniformity of the pressure through the degree of discoloration, the area of discoloration and the distribution of the discolored areas in the pressure-sensitive member.

3. The method for evaluating pressurization of an all-solid-state battery according to claim 1,
wherein the step of determining the pressure distribution of the all-solid-state battery from the image information of the pressure-sensitive member obtained in step (4) above includes obtaining color information of a plurality of unit inspection areas in the image of the pressure-sensitive member, calculating an average value thereof, and determining the pressure distribution of the all-solid-state battery by comparing the average value with a standard color sample of the pressure-sensitive member.

4. The method for evaluating pressurization of an all-solid-state battery according to claim 1,
wherein the pressure-sensitive member is included in the subject in a number of n (where n is an integer greater than or equal to 1).

5. The method for evaluating pressurization of an all-solid-state battery according to claim 1,
wherein the subject comprises all-solid-state batteries in a number of p and pressure-sensitive members in a number of q (where p and q are the same or different from each other, each independently an integer greater than or equal to 1), and the pressure-sensitive members are included between each of the all-solid-state batteries based on when the all-solid-state batteries in a number of p are stacked sequentially.

6. The method for evaluating pressurization of an all-solid-state battery according to claim 1,
wherein the pressure-sensitive member is a pressure-sensitive paper that develops color upon being compressed, and the pressure applied to the subject is measured based on the color development state of the pressure-sensitive paper.

7. The method for evaluating pressurization of an all-solid-state battery according to claim 1,
wherein the pressurizing means is a device comprising a hydraulic press operated by a jig or a warm hydrostatic press.

8. The method for evaluating pressurization of an all-solid-state battery according to claim 1,
wherein, prior to pressurization in step (2), at least one of upper side or lower side of the subject in step (1) further comprises an elastic member.

9. The method for evaluating pressurization of an all-solid-state battery according to claim 1,
wherein the ratio (a/b) of the size (a) of the cross-sectional area of the portion of the pressurizing means in contact with the subject and the size (b) of the cross-sectional area of the portion of the subject in contact with the pressurizing means at the time of pressurizing in step (2) is at least 8:1.

10. An apparatus for evaluating pressurization of an all-solid-state battery comprising a subject having a pressure-sensitive member located on at least one of an upper side or a lower side of the all-solid-state battery comprising a positive electrode, a negative electrode, and a solid electrolyte layer located between the positive electrode and negative electrode; and a pressurizing means for applying pressure to the subject, imparting image information to the pressure-sensitive member to determine a pressure distribution.

11. The apparatus for evaluating pressurization of an all-solid-state battery according to claim 10,
wherein the pressure applied to the subject is applied in the direction of the thickness of the all-solid-state battery.

12. The apparatus for evaluating pressurization of an all-solid-state battery according to claim 10,
wherein the pressure-sensitive member is included in the subject in a number of n (where n is an integer greater than or equal to 1).

13. The apparatus for evaluating pressurization of an all-solid-state battery according to claim 10,
wherein the pressure-sensitive member is a pressure-sensitive paper that develops color upon being compressed.

14. The apparatus for evaluating pressurization of an all-solid-state battery according to claim 10,
wherein the pressurizing means is a device comprising a hydraulic press operated by a jig or a warm hydrostatic press.

15. The apparatus for evaluating pressurization of an all-solid-state battery according to claim 10,
wherein at least one of the upper or lower side of the subject further comprises an elastic member.
